# EUROPÄISCHE PATENTSCHRIFT

(11) **EP 1 616 133 B1**
(45) Veröffentlichungstag und Bekanntmachung des Hinweises auf die Patenterteilung: **22.10.2008**
(21) Anmeldenummer: 03785933.7
(22) Anmeldetag: 23.12.2003
(51) Int. Cl.: F24F 12/00, F28D 1/04, F28D 7/10

(54) **FLUID-LUFT-KOMBIVERDAMPFER UND NEUES SCHALTKONZEPT FÜR EINE WÄRMEPUMPE IN EINEM LÜFTUNGSGERÄT**
COMBINED FLUID-AIR EVAPORATOR AND NOVEL SWITCHING CONCEPT FOR A HEAT PUMP IN A VENTILATING APPARATUS
EVAPORATEUR COMBINE FLUIDE/AIR ET CONCEPT DE BRANCHEMENT D'UNE POMPE A CHALEUR DANS UN APPAREIL DE VENTILATION

(30) Priorität: 23.04.2003 DE 10318457
(43) Veröffentlichungstag der Anmeldung: 18.01.2006
(73) Patentinhaber: Fraunhofer-Gesellschaft zur Förderung der angewandten Forschung e.V., 80686 München (DE)
(72) Erfinder: BICHLER, Christian, A-4654 Bad Wimsbach (AT); BÜHRING, Andreas, 79100 Freiburg (DE)
(74) Vertreter: Rösler, Uwe
(86) Internationale Anmeldenummer: PCT/EP2003/014836
(87) Internationale Veröffentlichungsnummer: WO 2004/094921

(56) Entgegenhaltungen:
- WO-A-99/13272
- DE-A- 3 006 318
- DE-A- 3 035 322
- DE-A- 10 058 273
- DE-A- 19 909 286
- US-A- 5 898 995

## Beschreibung

### Technisches Gebiet

Die Erfindung bezieht sich auf eine Wärmepumpe mit einem Kältemittelkreislauf, in dem ein Kältemittelverdampfer vorgesehen ist, der vorzugsweise in einer für Gebäude geeignete Lüftungsanordnung einsetzbar ist.

### Stand der Technik

In neu errichteten Wohngebäuden werden in zunehmendem Maße verstärkt Lüftungsgeräte mit Wärmerückgewinnung eingebaut, die zu einem höheren Wohnkomfort führen, da der erforderliche Luftaustausch automatisch sichergestellt wird und durch die Wärmerückgewinnung das Temperaturniveau der Zuluft deutlich angehoben wird. Durch die gezielte Nutzung der Abluftwärme zur Vorwärmung der Zuluft im Wege eines Luft-Luft-Wärmeübertrager kann der Heizwärmebetrieb für ein Gebäude gesenkt und somit Energie eingespart werden.

Auch sind Lüftungsgeräte mit eingebauter Wärmepumpe bekannt, die für die Erwärmung der Zuluft sowie eines Speichers, bspw. Brauchwasserspeichers, konzipiert sind und als sog. Abluft-Wärmepumpen arbeiten. In an sich bekannter Weise erfolgt eine Wärmeübertragung von der Gebäudeabluft auf einen in aller Regel kühleren Außenluftstrom im Wege eines Luft-Luft-Wärmeübertragers, bevor die im Wege der Wärmeübertragung abgekühlte Gebäudeabluft dem Verdampfer der Wärmepumpe zugeführt wird indem die abgekühlte Gebäudeabluft einem weiteren Wärmeentzug unterliegt bevor sie als Fortluft in die Umgebung ausgetragen wird. Insbesondere in Fällen geringer Temperaturen, bei denen die abgekühlte Gebäudeabluft den Verdampfer der Wärmepumpe durchströmt, treten häufig Vereisungserscheinungen innerhalb des Verdampfers auf, durch die die Funktion der Wärmepumpe nachhaltig beeinflusst wird bis hin zum Erliegen kommt, so dass geeignete Maßnahmen zu treffen sind entsprechenden Vereisungserscheinungen entgegenzuwirken.

Beispielsweise wird in Fällen einer bereits eingetretenen Vereisung oder zu Zwecken der Prävention in Zeiten einer erhöhten Vereisungsgefahr der, den Verdampfer der Wärmepumpe durchströmende Abluftstrom mittels Gasheizung oder elektrischer Heizung zusätzlich erwärmt. Diese Maßnahme ist nicht nur mit einem kostenrelevanten Energieeintrag verbunden, sondern setzt überdies eine konstruktiv aufwendige Heizungskomponente voraus, die in Strömungsrichtung des Abluftstroms vor Eintritt in den Verdampfer der Wärmepumpe vorzusehen ist.

Zusätzlich zu dem vorstehenden Wunsch nach einer möglichst ökonomischen Zulufterwärmung, insbesondere während der kalten Jahreszeit, besteht überdies bei sommerlichen Außentemperaturen der Wunsch nach einer effektiven und ökonomischen Kühlung der Wohnräume. Eine diesbezügliche Nachfrage spiegelt sich in den zunehmenden Absatzzahlen von zumeist wenig effizienten sog. Splitgeräten wieder, die zur Raumkühlung als auch Zulufterwärmung geeignet sind.

Werden Erdreichwärmeübertrager, bspw. in Form sog. Luft-Erdregister oder sog. geschlossene Solekreise verwendet, so kann eine passive Vorkühlung der Gebäudezuluft auch dadurch erreicht werden, indem die in Sommerzeiten warme Zuluft mit der gegenüber Lufttemperatur deutlich tieferen Erdreichtemperatur thermisch gekoppelt wird. Überdies ist es möglich mittels einer Wärmepumpe die vorstehend beschriebene passive Vorkühlung aufgrund der erheblich höheren Kühlleistung der Wärmepumpe zu steigern. Hierzu bedarf es jedoch innerhalb der komplizierten Kreislaufsysteme, in denen Wärmepumpen integriert sind, Vierwegeventile oder Dreiwegeventile mit möglichen Leckagen. Auch ist der Einsatz teurer Magnetventile bekannt, wodurch der Kältekreislauf komplizierter, teurer und störanfälliger wird. Hinzu kommt, dass beim Umschalten zwischen Wärme- und Kältebetrieb der Wärmepumpe, der Kältekreislauf kurzzeitig instabil wird, was sich nicht nur in einer Verringerung der Leistungszahl der Wärmepumpe niederschlägt, sondern darüber hinaus auch auf eine Reduzierung der Standzeit bzw. Lebensdauer des Kompressors auswirkt.

Aber vor allem bei herkömmlichen Luft - Wasserwärmepumpen stellt die Vereisung des Verdampfers ein großes Problem dar. Die Wärmepumpe ist nicht mit einem Luft-Luft-Wärmetauscher (so wie es bei einem Lüftungs-Kompakt-Gerät der Fall ist) ausgestattet, dadurch wird die Luft für den Verdampfer nicht durch die Raumabluft vorgewärmt und es treten öfters Vereisungen bei tiefen Außentemperaturen auf, d.h. eine Luft-Wasserwärmepumpe ist zumeist nur bis Außentemperaturen von ca. -5 °C (von Hersteller verschieden) effizient zur betreiben. Unter diesen angegebenen Außentemperaturen muss jedoch sehr oft abgetaut werden, wodurch sich die Leistungszahl der Wärmepumpe verschlechtert. Um dies zu begegnen ist es sinnvoller mit einer zusätzlichen Wärmequelle, bspw. in Form elektrischer Heizer oder mittels Öl- oder Gaskesselheizungen auf bivalentem Wege nachzuheizen.

Aus der DE 199 09 286 A1 geht ein Heizungs- Klimatisierungssystem für Kraftfahrzeuge hervor, bei dem im Wärmepumpenkreis ein Kältemittel/Kühlmittelverdampfer vorgesehen ist, der als Flüssig/Flüssig-Wärmetauscher ausgebildet ist.
In der US 5,898,995 wird ein Flüssig-Luft-Wärmetauschersystem beschrieben. Im Einzelnen handelt es sich um einen ersten Flüssigkeitskreislauf, der mäanderförmig verläuft, der in thermischen Kontakt mit einem zweiten Flüssigkeitskreislauf steht, durch den eine getrennte Flüssigkeit geleitet werden kann. Zusätzlich befinden sich zwischen den beabstandeten, geradlinig ausgebildeten Strömungskanälen Luft-Wärmetauscheroberflächen, die eine thermische Kopplung zwischen Luft und den im Inneren der getrennten Flüssigkeitskreisläufe geführten Flüssigkeiten schafft.

Eine ähnliche Anordnung zu dem vorstehenden Flüssig-Luft-Wärmetauschersystem ist der DE 30 35 322 zu entnehmen. Auch hier sind zwei Flüssigkeitskreisläufe thermisch miteinander gekoppelt, die überdies Wärmeübertragungselemente für einen angekoppelten Luftstrom vorsehen.

Aus der DE-A-3006318 geht eine Lüftungsvorrichtung zum Be- und Entlüften von Räumen hervor, bei der der Abluftstrom zunächst über einen Wärmetauscher in thermischen Kontakt mit dem Außenluftstrom und anschließend in thermischen Kontakt mit dem Pumpen-Wärmetauscher tritt, bevor er als Fortluft die Lüftungsvorrichtung verlässt. Ferner wird ein Außenluftstrom durch die Lüftungsvorrichtung in den Raum geleitet. Der Außenluftstrom gelangt dabei innerhalb der Lüftungsvorrichtung nach Passieren des bereits angesprochenen Wärmetauschers in thermischen Kontakt mit einem zweiten Pumpen-Wärmetauscher bevor der erwärmte Außenluftstrom in den Raum strömt. Die Pumpen-Wärmetauscher und sind Bestandteile einer Wärmepumpe und werden in bekannter Weise von einem Kältemittel im Kreislauf einer Wärmepumpe durchströmt.

Als wesentlicher Aspekt ist dieser Druckschrift zu entnehmen, dass je nach Betriebsart der Wärmepumpe, dem Abluftstrom über den Pumpen-Wärmetauscher Wärme entzogen oder zugeführt wird und diese Wärme über den zweiten Pumpen-Wärmetauscher dem Außenluftstrom zugeführt oder entzogen werden kann. Nachteile bei dieser Lüftungsvorrichtung ergeben sich in der Anfälligkeit des Pumpen-Wärmetauschers gegen Vereisung bei geringen Außenlufttemperaturen und der daraus folgenden verminderten Betriebssicherheit.

In der WO-A-9913272 wird ein Ansaug- und Filtersystem zur Gewinnung und Aufbereitung von Frischluft sowie dessen Verwendung in einem Lüftungssystem beschrieben. In dem Lüftungssystem, wird ebenfalls in bekannter Weise der Abluftstrom nach Passieren eines Wärmetauschers in thermischen Kontakt mit einem Verdampfer einer Wärmepumpe gebracht. Dabei wird dem Abluftstrom Wärme entzogen, die über die Wärmepumpe am Kondensator an einen Wärmespeicher abgegeben wird. Somit wird im Gegensatz zur vorstehend beschriebenen DE-A-3006318, die aus dem Abluftstrom entzogene Wärme nicht direkt zur Erwärmung der Zuluft verwendet, d.h. es besteht hier über die Wärmepumpe kein direkter Wärmeaustausch zwischen Abluft und Zuluft. Zur Erwärmung der Zuluft ist ein weiterer Wärmetauscher als Element eines separat angeschlossenen Wasserkreislaufs vorgesehen, bestehend aus einer zu dem Wärmespeicher hinführenden Leitung, einem im Wärmetauscher angeordneten Leitungsabschnitt und einer von dem Wärmespeicher wegführenden Leitung.

### Darstellung der Erfindung

Der Erfindung liegt die Aufgabe zugrunde, eine Lösung für die vorstehend beschriebenen Probleme anzugeben, so dass ein Umschalten zwischen Wärme- und Kältebetrieb einer in einer Gebäudelüftungsanordnung integrierten Wärmepumpe mit technisch möglichst einfach zu realisierenden Mitteln möglich wird. Die bei den bekannten Wärmepumpen auftretenden Vereisungserscheinungen sollen weitgehend vermieden werden, insbesondere soll die Betriebssicherheit sowie auch die Lebensdauer der im Kreislauf von Wärmepumpe beteiligten Komponenten verbessert werden.

Die Lösung der der Erfindung zugrunde liegenden Aufgabe ist im Anspruch 1 angegeben, der eine Wärmepumpe beschreibt, deren Einsatz innerhalb einer in Anspruch 7 enthaltenden Lüftungsanordnung für Gebäude beschriebenen ist. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Die lösungsgemäße Wärmepumpe basiert auf einem Verdampferkonzept, das sich als Fluid-Luft-Kombiverdampfer bezeichnen lässt und wenigstens zwei getrennte Kanalsysteme aufweist, durch die jeweils getrennte Stoffströme geführt werden können. Wenigstens eines der beiden Kanalsysteme weist eine freie Oberfläche auf, die in thermischen Kontakt vorzugsweise mit einem Luftstrom zu bringen ist. Beide Kanalsysteme stehen überdies zumindest abschnittsweise im gemeinsamen thermischen Kontakt.

In einem einfachsten Ausführungsbeispiel ist der Fluid-Luft-Kombiverdampfer als ein Koaxialrohrsystem ausgebildet, das eine erste Rohrleitung vorsieht, in der innenliegend eine zweite Rohrleitung verläuft. So trennt die innen liegende Rohrleitung ein erstes Kanalsystem von dem zweiten Kanalsystem, das durch das von beiden Rohren eingeschlossene Volumen gebildet wird.

Durch beide Kanalsysteme können getrennte Stoffströme, vorzugsweise getrennte Flüssigkeitsströmungen eingebracht werden, die über die gesamte Länge des Rohrsystems über die Rohrinnenwand in thermischen Kontakt miteinander stehen.

Eine alternative Ausführungsform des Fluid-Luft-Kombiverdampfers sieht eine einzige Rohrleitung vor, die innen liegend eine Trennwand aufweist, die die Rohrleitung längs ihrer gesamten Erstreckung in zwei Rohrleitungshälften auftrennt. Auch in diesem Fall gelangen zwei durch die jeweiligen Rohrleitungshälften hindurch tretende Stoffströme durch die innen liegende Trennwand in thermischen Kontakt miteinander und zudem ist ein Wärmeübergang zwischen den einzelnen Fluidströmungen und ein die Rohrleitung umströmender Luftstrom gewährleistet.

Für den lösungsgemäßen Einsatz des Fluid-Luft-Kombiverdampfers als Kältemittelverdampfer wird durch eines der beiden Kanalsysteme Kältemittel und durch das andere Kanalsystem ein Wärme abgebendes Fluid, vorzugsweise in Form einer Sole, d.h. ein z.B. Glykol-Wassergemisch, geleitet. Auf dieser Weise tritt das Kältemittel in thermischen Kontakt sowohl mit dem wärmeabgebenden Fluid als auch vermittels der, an der freien Oberfläche angebrachten lamellenartigen Flächenelemente mit dem gerichteten Luftstrom.

Mit Hilfe des Kältemittelverdampfers gewinnt die Wärmepumpe an einem entscheidenden Vorteil im Hinblick auf die Reduzierung der Vereisungsgefahr bei niedrigen Betriebstemperaturen. Darüber hinaus steigt der Wirkungsgrad der Wärmepumpe, zumal durch den zusätzlichen Wärmebeitrag im Verdampfer die Verdampfungstemperatur erhöht wird, wodurch weniger Energie in den Betrieb der Wärmepumpe zu investieren ist.

Durch Integration einer vorstehend beschriebenen Wärmepumpe in eine Lüftungsanordnung für ein Gebäude lassen sich eine Vielzahl überaus interessanter und technisch einfach zu realisierende Gebäudebe- und Gebäudeentlüftungskonstellationen mit verschiedenen Heizungs- und Kühlungsvarianten schaffen.

Bei einer erfindungsgemäß ausgebildeten Lüftungsanordnung für ein Gebäude tritt ein aus dem Gebäude gerichteter Abluftstrom über einen Luft-Luft-Wärmeübertrager mit einem entsprechenden Außenzuluftstrom in thermischen Kontakt, wobei in Strömungsrichtung nach dem Luft-Luft-Wärmetauscher ein Fluid-Luft-Kombiverdampfer vorgesehen ist, der von dem Abluftstrom, der aus dem Luft-Luft-Wärmeübertrager austritt, überströmt wird. Der Fluid-Luft-Kombiverdampfer weist, wie vorstehend beschrieben, wenigstens zwei getrennte Kanalsysteme auf, die im thermischen Kontakt zueinander stehen und durch die jeweils getrennt voneinander ein Kältemittel sowie ein Wärme abgebendes Fluid geleitet werden, wobei das Kältemittel im Kreislauf einer Wärmepumpe zirkuliert, deren Kondensator im Außenluftstrom in Strömungsrichtung dem Luft-Luft-Wärmetauscher nachfolgend angeordnet ist. Das den Fluid-Luft-Kombiverdampfer durchsetzende Wärme abgeben Fluid zirkuliert hingegen im Kreislauf eines Wärmespeichersystems, das vorzugsweise einen Erdwärmekollektor aufweist. Ebenso sind jedoch auch Luft- oder Wasserwärmekollektorsysteme geeignet, mit denen bspw. die Wärmenutzung von Gewässern, Brunnen oder von Abwässern möglich ist.

Der Hauptvorteil der vorstehend beschriebenen Lüftungsanordnung besteht darin, dass der Verdampfer der Wärmepumpe in Form des Fluid-Luft-Kombiverdampfers sowohl von dem Kältemittel der Wärmepumpe als auch von wenigstens einem weiteren Fluid durchströmt wird, dessen Wärmegehalt durch direkte thermische Kopplung auf das Kältemittel der Wärmepumpe übertragen wird. Hierdurch ist es möglich die Vereisungsgefahr des Verdampfers insbesondere bei kühlen Umgebungstemperaturen deutlich zu reduzieren, zum anderen kann die Verdampfungstemperatur gehoben werden, wodurch der für den Wärmepumpenbetrieb erforderliche Energieeintrag reduziert und vor allem die Kälteleistung der Wärmepumpe dadurch gesteigert werden kann.

Die erfindungsgemäß ausgebildete Lüftungsanordnung bietet darüber hinaus eine Vielzahl weiterer Vorteile hinsichtlich unterschiedlicher Betriebsweisen in Abhängigkeit der jeweils vorherrschenden Umgebungstemperaturbedingungen. Diese sollen im Weiteren unter Bezugnahme auf die Ausführungsbeispiele im Einzelnen beschrieben werden.

Auch ermöglicht die vorgeschlagene Integration der erfindungsgemäß ausgebildeten Wärmepumpe ein besonders vorteilhaftes Beheizung und/od. Kühlung von Altgebäuden, zumal durch den Fluid-Luft-Kombiverdampfer verschiedene Wärmequellen je nach Außentemperatur gewählt werden können. Zum Beispiel kann für die Beheizung in der Übergangszeit (Herbst/Frühling) die Außenluft herangezogen werden und bei tiefen Außenlufttemperaturen wie sie im Winter auftreten ein Erdkollektor zugeschaltet werden. Für die Brauchwassererwärmung wird die jeweils wärmste Wärmequelle herangezogen. Auch sind Kombinationen von beiden Wärmequellen denkbar. Auf diese Weise kann eine konstante höhere Verdampfungstemperatur und damit verbunden eine höhere Heizleistung erzielt werden.
In Altgebäuden ist trotzt Fassadenrenovierung des Gebäudes, noch immer, bedingt durch das Heizsystem (meistens Heizkörper mit Auslegung 70/55), eine hohe Vorlauftemperatur erforderlich. Der Einsatz des Kombiverdampfers würde es ermöglichen, diese Anforderung effizienter gerecht zu werden.
Zum Beheizen eines neueren Hauses, das mit einer Niedertemperaturheizung (z.B. Fußboden- od./und Wandheizung) ausgestattet ist, ist der Kombiverdampfer, der in einer herkömmlichen Luft-Wasser Wärmepumpe integriert ist, natürlich noch effizienter als mit höheren Vorlauftemperaturen wie bei Altbauten.

Lüftüngs-Kompakt-Geräte mit den Kombiverdampfer sind für den Einsatz in Niedrig - energiehäuser und so genannte 3- Literhäuser durch die beschriebenen Vorteile eine sehr gute effiziente Lösung.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung eines Fluid-Luft-Kombiverdampfers,
- Fig. 2: schematisierte Gesamtbilddarstellung einer Lüftungsanordnung für ein Gebäude,
- Fig. 3: Darstellung gemäß Figur 2 mit zusätzlichem Solarkollektorkreis,
- Fig. 4a, b: Gesamtbilddarstellungen für eine Gebäudelüftungsanordnung in unterschiedlichen Betriebszuständen.

### Wege zur Ausführung der Erfindung, gewerbliche Verwendbarkeit

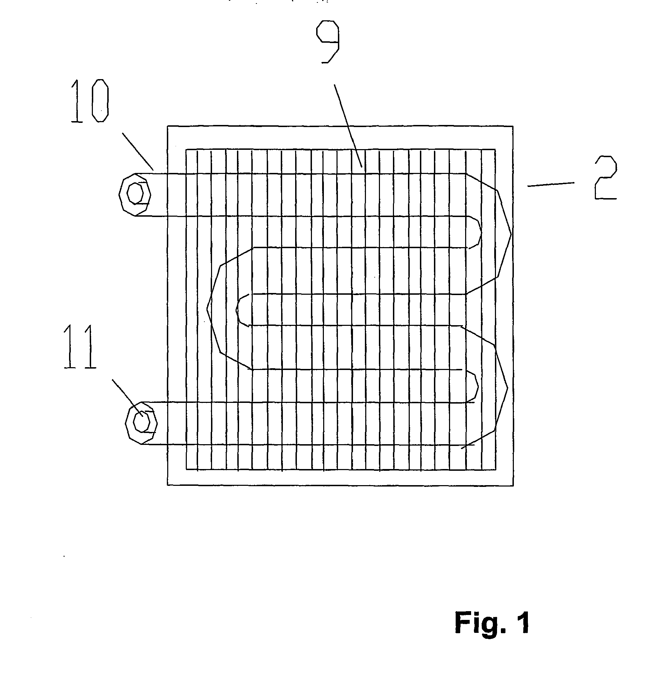

Figur 1 zeigt eine stark vereinfachte Darstellung eines Flüssigkeits-Luft-Kombiverdampfer, der aus einem Koaxialrohrleitungssystem besteht, das ein Außenrohr 10 sowie ein koaxial innen verlaufendes Innenrohr 11 aufweist. In evidenter Weise gilt für den Rohrinnendurchmesser d1 der Rohrleitung 10 und Rohrinnendurchmesser d2 der Rohrleitung 11: d2 < d1.

Die äußere Rohrleitung 10 weist eine freie Oberfläche auf, die im körperlichen und somit thermischen Kontakt zu einer Luftlamellenanordnung 9 steht. Im Hinblick auf Figur 1 sei angenommen, dass die Lamellenkörper 9 die Zeichenebene senkrecht schneiden. Ein ebenfalls senkrecht zur Zeichenebene gerichteter Luftstrom tritt thermisch in Kontakt mit den Lammelenkörpern 9, die letztlich einen Wärmeübergang zu beiden, die jeweiligen Rohrleitungen 10 und 11 durchtretenden Fluid- bzw. Flüssigkeitsströme bewirken.

In besonders vorteilhafter Weise eignet sich der Fluid-Luft-Kombiverdampfer als Kältemittelverdampfer, wobei durch die Rohrleitung 11 ein Wärme abgebendes Fluid, bspw. Sole und durch die Rohrleitung 10 ein Kältemittel hindurchgeleitet wird. Somit besteht ein enger thermischer Kontakt zwischen dem Kältemittel, dem Wärme abgebenden Fluid und der die Lamellen 9 umströmenden Luft.

Selbstverständlich ist es möglich die vorstehende thermische Kopplung zwischen den drei Stoffströmen auch mit alternativen Ausbildungen des vorstehend beschriebenen Fluid-Luft-Kombiverdampfers zu realisieren, bspw. durch Vorsehen zweier gleich oder unterschiedlich dimensionierter Rohrleitungen, die beidseitig mit der Lamellenanordnung 9 körperlich und somit in thermischem Kontakt stehen. Auch sind Rohrleitungen denkbar, die eine innen liegende Trennwand aufweisen, durch die eine einzige Rohrleitung in zwei unterschiedliche Kanalsysteme aufgetrennt werden kann. Selbstverständlich sind auch weitere Ausführungsformen möglich, die eine thermische Kopplung unterschiedlicher Fluidströme realisieren, wie Halbrundrohre oder Rohre mit einem inneren Sternprofil, die mehrere Kanäle aufweisen.

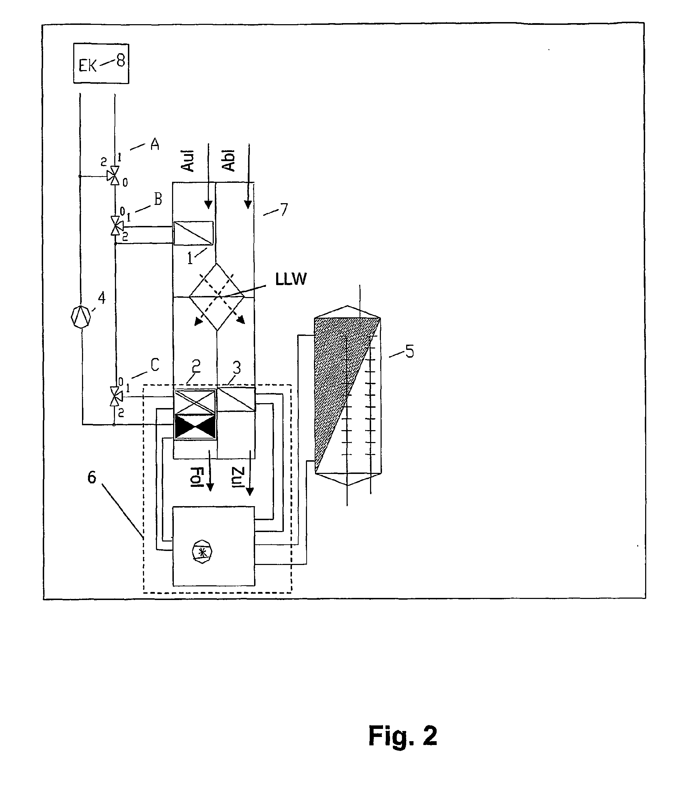

Der Fluid-Luft-Kombiverdampfer eignet sich als Kältemittelverdampfereinheit im Rahmen einer Wärmepumpe, die letztlich Teil einer Gebäudelüftungsanordnung ist, die im Weiteren unter Bezugnahme auf Figur 2 beschrieben wird.

Die mit dem Bezugszeichen 7 versehene Lüftungsanordnung gemäß Figur 2 umfasst im Wesentlichen zwei getrennt voneinander geführte Strömungskanäle (siehe Strömungspfeile), die jeweils über einen Luft-Luft-Wärmetauscher LLW durch Kreuzflussrichtung (gestrichelte Pfeildarstellung) in thermischen Kontakt miteinander treten. Selbstverständlich sind auch andere Luft-Luft-Wärmeübertragersysteme, wie bspw. Gegenstromwärmeübertrager, einsetzbar. So tritt ein Abluftstrom Abl aus dem Gebäudeinneren in die Lüftungsanordnung 7 ein, passiert den Luft-Luft-Wärmeübertrager LLW, durchströmt anschließend den Fluid-Luft-Kombiverdampfer 2 und tritt letztlich als Fortluftstrom Fol aus der Lüftungsanordnung 7 in die Umgebung aus. Ferner tritt ein Außenluftstrom Aul in die Lüftungsanordnung 7 ein und durchströmt einen Fluid-Luftwärmetauscher 1, bevor der Außenluftstrom Aul den Luft-Luft-Wärmeübertrager LLW passiert, in dem der Außenluftstrom Aul mit dem Abluftstrom Abl in thermischen Kontakt tritt. Schließlich durchströmt der Außenluftstrom Aul, dem Luft-Luft-Wärmetauscher LLW in Strömungsrichtung nachfolgend einen Kondensator 3 und tritt letztlich als Zuluftstrom Zul in das Gebäudeinnere ein.

Besondere Beachtung bei der in Figur 2 dargestellten Lüftungsanordnung 7 ist die Verschaltung des Fluid-Luft-Kombiverdampfers 2, der sowohl von einem Wärme abgebenden Fluid, vorzugsweise Sole, die im Kreislauf eines Kollektors 8, bspw. eines Erdkollektor unterstützt durch eine Pumpe 4 zirkuliert, als auch von Kältemittel durchströmt wird, das den Kältemittelkreislauf einer Wärmepumpe 6 durchläuft. Somit ist der Fluid-Luft-Kombiverdampfer 2 Teil einer Wärmepumpe 6, die überdies den Kondensator 3 mit umfasst. Ferner im besteht gezeigten Ausführungsbeispiel eine thermische Kopplung zwischen der Wärmepumpe 6 und einem Brauchwasserspeicher 5.

Die in Figur 2 dargestellte Lüftungsanordnung ermöglicht unterschiedliche Betriebsweisen, die mit Hilfe von z.B. Dreiwegeventilen A, B, C innerhalb des Erdkollektorkreislaufes unterschiedlich geschaltet werden können. Die in Figur 2 dargestellten Dreiwegeventile können alternativ auch durch Magnetventile oder ähnliche Einheiten zur Umlenkung oder Versperren von Fluidströmungen ersetzt werden.

Grundsätzlich sei erwähnt, dass der Kombiverdampfer anstelle eines Erdkollektors an jede beliebige Wärmequelle angeschlossen werden kann, bspw. an Brunnenwasser, Seewasser, Abwasser, Absorberzaun, Solarkollektoren, usw.. Ferner ist es möglich, dass auch unterschiedliche Wärmequellen extern miteinander verschaltet werden können, d.h. steht bspw. zu wenig Grundfläche für einen ausreichend dimensionierten Erdkollektor zur Verfügung, so könnte der Erdkollektor bspw. mit Brunnenwasser durch eine zusätzliche Pumpe und einen Wärmetauscher oder auch direkt, durch verwenden eines Stemprofils, gekoppelt werden.

Im Weiteren sei angenommen, dass die Schaltstellung 0 stets geöffnet ist. So ergeben sich in Abhängigkeit der Schaltstellung hinsichtlich der Dreiwegeventile A, B, C folgende Betriebsweisen. Jedes Dreiwegeventil verfügt über die Schaltstellungen 1, 2 und 0, wobei 0 stets geöffnet ist. Zur vereinfachten weiteren Sprachregelung sei folgendes angenommen: "Ventil A Stellung 1" bedeutet: Schaltstellung 1 geöffnet, Schaltstellung 2 geschlossen. "Ventil A Stellung 2" bedeutet: Schaltstellung 1 geschlossen, Schaltstellung 2 geöffnet.

Geht man im einfachsten Fall davon aus, dass die Wärmepumpe ausgeschaltet ist und die Außenlufttemperatur geringer als die Erdkollektortemperatur ist, so sind folgende Betriebsweisen möglich:

Es sei angenommen, dass Ventil A in Stellung 1, Ventil B in Stellung 1 und Ventil C in Stellung 2 sind. In diesem Fall dient der Fluid-Luftwärmeübertrager 1 als Außenluftvorwärmer und darüber hinaus als Frostschutzeinrichtung für den nachfolgenden Luft-Luft-Wärmeübertrager LLW.

Sollte die den Luft-Luft-Wärmeübertrager LLW durchtretende Abluftströmung Abl eine Temperatur aufweisen, die über der Erdkollektortemperatur ist, so ist bei einer Schaltstellung A Stellung 1, B Stellung 2, C Stellung 1 eine Erwärmung des Erdkollektors 8 möglich. Befinden sich die Dreiwegeventile A in Stellung 2, B in Stellung 1 und C in Stellung 1, so erfolgt eine Erwärmung des Fluid-Luft-Wärmeübertragers 1. Sind hingegen die Dreiwegeventile A in Stellung 1, B in Stellung 1 und C in Stellung 1, so erfolgt sowohl eine Erwärmung des Erdkollektors 8 als auch eine Erwärmung des Fluid-Luft-Wärmeübertragers 1.

Sei jedoch angenommen, dass die Wärmepumpe 6 in Betrieb ist, so kann bspw. eine gezielte Erwärmung des Brauchwasserspeichers 5 oder/und des Kondensators 3 vorgenommen werden. Dies ist der Fall, wenn die Dreiwegeventile A in Stellung 1, B in Stellung 2 und C in Stellung 1 sind. Hierbei nutzt die Wärmepumpe 6 die Wärme des Erdkollektors 8 und zusätzlich die Abluftwärme durch die thermische Kopplung zwischen Abluft Abl und dem Fluid-Luft-Kombiverdampfer 2 und gibt diese Wärme an den Speicher 5 und/oder des Kondensators 3 ab. Befinden sich die Dreiwegeventile A in Stellung 1, B in Stellung 1 und C in Stellung 2, so wird bei Heizbetrieb die Abluftwärme für die Verdampfung verwendet. Ist die Pumpe auf "aus" sind die Stellungen der Dreiwegeventile nicht relevant. Lediglich damit keine Schwerkraftzirkulation eintreten kann, ist beim Dreiwegeventil C die Stellung 2 zu empfehlen.

Befinden sich alle drei Dreiwegeventile A, B, C jeweils in Stellung 1, so dient einerseits der Erdkollektorkreislauf 8 einer Vortemperierung des Fluid-Luft-Wärmeübertrager 1, als auch zur Erwärmung des Fluid-Luft-Kombiverdampfers 2.

Soll die Lüftungsanordnung in den Sommermonaten zur passiven Kühlung eingesetzt werden, so sind die Dreiwegeventile A in Stellung 1, B in Stellung 1 und C in Stellung 2 zu bringen.

Zusätzlich kann der Fluid-Luft-Kombiverdampfer 2 die kalte Abluft Abl nutzen, sofern die Ablufttemperatur geringer ist als die Erdkollektortemperatur ist, um letztlich den Fluid-Luft-Wärmeübertrager 1 zu kühlen. Dies ist der Fall, wenn die Dreiwegeventile A in Stellung 2, B in Stellung 1 und C in Stellung 1 sind. Sollten die Dreiwegeventile A in Stellung 1, B in Stellung 2 und C in Stellung 1 sein, so ist eine gezielte Kühlung des Erdkollektors 8 möglich. Sollen unter diesen Bedingungen sowohl der Erdkollektor 8 als auch der Fluid-Wärmeübertrager 1 gekühlt werden, so sind die Dreiwegeventile A in Stellung 1, B in Stellung 1 und C in Stellung 1 zu schalten.

Werden die Dreiwegeventile A, B, C aktiv geschalten, so kann eine Kühlung mit aktiver Speichererwärmung erfolgen, wenn die Dreiwegeventile A in Stellung 2, B in Stellung 1 und C in Stellung 1 gebracht werden, wobei eine Erwärmung des Brauchwasserspeichers 5 erfolgt und der Fluid-Luft-Kombiverdampfer 2 durch die Wärmepumpe abgekühlt wird. Das gekühlte Fluid wird nun zum Fluid-Wärmeübertrager 1 gepumpt, der wiederum die Außenluft aktiv abzukühlen vermag.

Im Falle der Schaltstellung A in Stellung 2, B in Stellung 1 und C in Stellung 1 wird der Fluid-Luft-Kombiverdampfer 2 durch die Wärmepumpe 6 abgekühlt. Das gekühlte Fluid wird nun zum Fluid-Luft-Wärmeübertrager 1 gepumpt, der die Außenluft kühlt. Kann der Brauchwasserspeicher 5 keine Wärme mehr aufnehmen, so kann die am Kondensator 3 anfallende Wärme durch entsprechende Beimischung der Zuluftströmung in Richtung der Fortluft abgegeben werden. Die ist bspw. durch entsprechende Klappen möglich, mit denen der die Zuluftströmung in die Fortluft geleitet wird. Ist die Abgabe der Kondenstatorwärme durch Umlenkung in die Fortluft nicht möglich, dies könnte der Fall sein, wenn die hierfür erforderlichen Maßnahmen zu teuer sind, so kann durch Vorsehen eines zusätzlichen Kondensators im Außenbereich die Wärme gezielt an die Umgebungsluft abgeführt werden.
Dies wäre nötig, wenn kein Brauchwasserspeicher od. kein Pufferspeicher vorhanden ist, und trotzdem aktiv gekühlt werden soll.

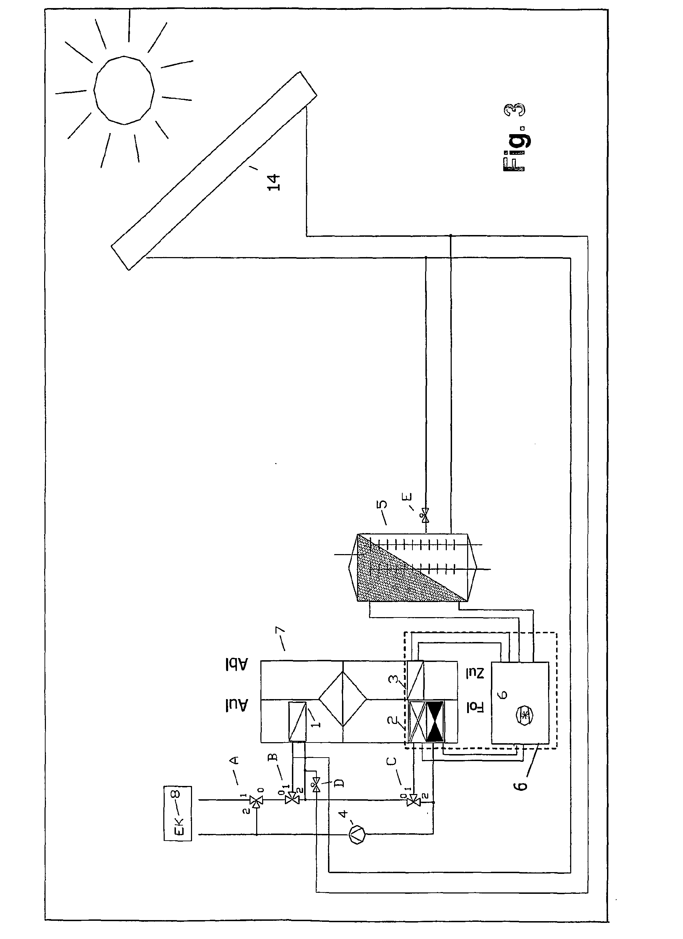

Figur 3 zeigt eine gegenüber Figur 2 erweiterte Ausbildung der Lüftungsanordnung durch Kombination eines Solarkollektors 14, dessen Kollektorstromkreislauf mit dem Erdkollektorstromkreislauf in der angegebenen Weise gekoppelt ist, wodurch ein zusätzlicher Wärmegewinn für die Vorwärmung der Außenluft Aul vorliegt. Sollte bspw. bei einer geringen Sonneneinstrahlung die mit dem Solarkollektor 14 erzielbare Temperaturerhöhung nicht für die Erwärmung des Brauchwasserspeichers 5 ausreichen, so kann über eine entsprechende Ventilstellung des Ventils D der Wärmefluss der Kollektorströmung mit dem Erdkollektorkreislauf gekoppelt werden, um bspw. den Fluid-Luft-Wärmeübertrager 1 zusätzlich zu erwärmen. Ebenfalls könnte der in Figur 3 eingetragene Solarkollektorkreislauf zusätzlich über eine Ventilanbringung mit dem Fluidkreislauf des Fluid-Luft-Kombiverdampfers 2 kombiniert werden. Dies jedoch erfordert geeignete Ventilvorkehrungen, durch die es überdies möglich wäre den Solarkollektorkreislauf thermisch in Kombination oder in Alternativstellung mit dem Fluid-Luft-Wärmeübertrager 1 und dem Fluid-Luft-Kombiverdampfers 2 zu koppeln.

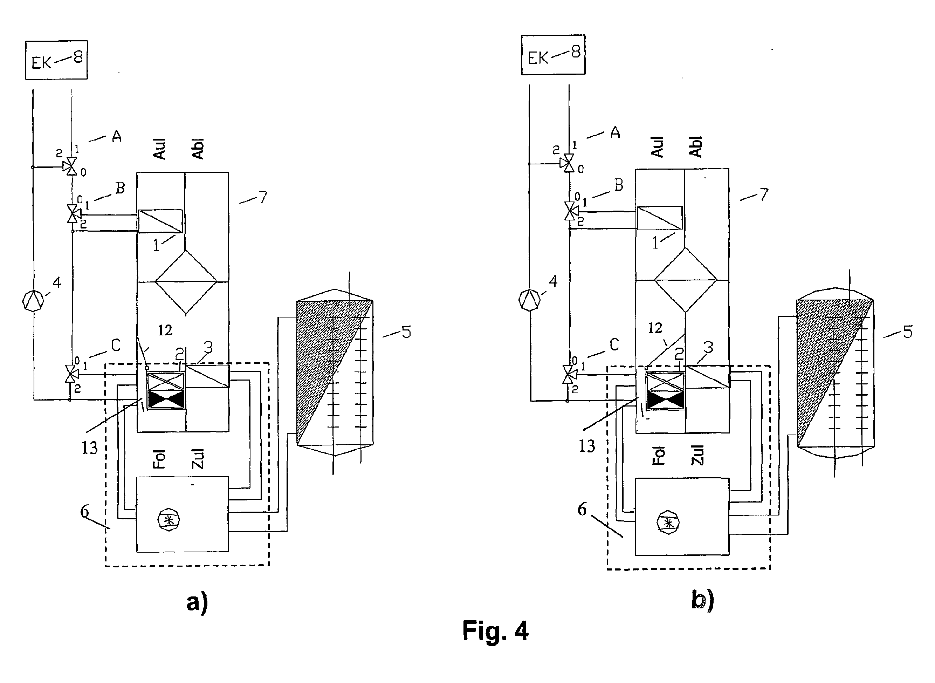

Eine weitere Betriebsmöglichkeit für die Lüftungsanordnung 7 ist in den Figuren 4a und 4b dargestellt, die in Strömungsrichtung unmittelbar vor dem Flüssigkeits-Luft-Kombiverdampfer 2 eine in Form einer Klappe ausgebildete den Strömungsfluss umlenkende Einheit 12 vorsieht. Herrschen bspw. sehr geringe Außenluft- sowie Ablufttemperaturen vor, so kann es zur Effizienz des Fluid-Luft-Kombiverdampfers 2 vorteilhaft sein, die kalte Abluftströmung durch Schließen der Klappe 12 (siehe Figur 4b) am Fluid-Luft-Kombiverdampfers 2 über einen Bypasskanal 13 vorbeizuleiten. In dieser Betriebsstellung wird der Fluid-Luft-Kombiverdampfer 2 ausschließlich durch das Wärme abgebende Fluid, das im Kreislauf des Erdkollektors 8 zirkuliert, temperiert. In der in Figur 4a dargestellten Klappenstellung ist der Bypasskanal 13 geschlossen, wodurch eine frei Durchströmung des Fluid-Luft-Kombiverdampfers 2 mit der Abluft Abl gewährleistet ist. Wenn die Pumpe 4 auf "ein" geschaltet ist, und die Dreiwegeventile A in Stellung 1, B in Stellung 1 (oder 2 auch möglich) und C in Stellung 1 sind, ist ein gleichzeitiger Betrieb des Kombiverdampfers mit Abluft und Sole möglich. Die Klappenstellung 12 kann auch so konstruiert sein, dass z.B. nur der Bypasskanal 13 geschlossen oder geöffnet wird, und der Kombiverdampfer immer durchströmt wird. Es ist auch möglich, durch andere z.B. Klappenkonstruktionen Teilströmungen zu erzielen, d.h ein Teil der Luft durch den Bypasskanal 13 und ein Teil durch den Fluid-Luft-Kombiverdampfers 2.

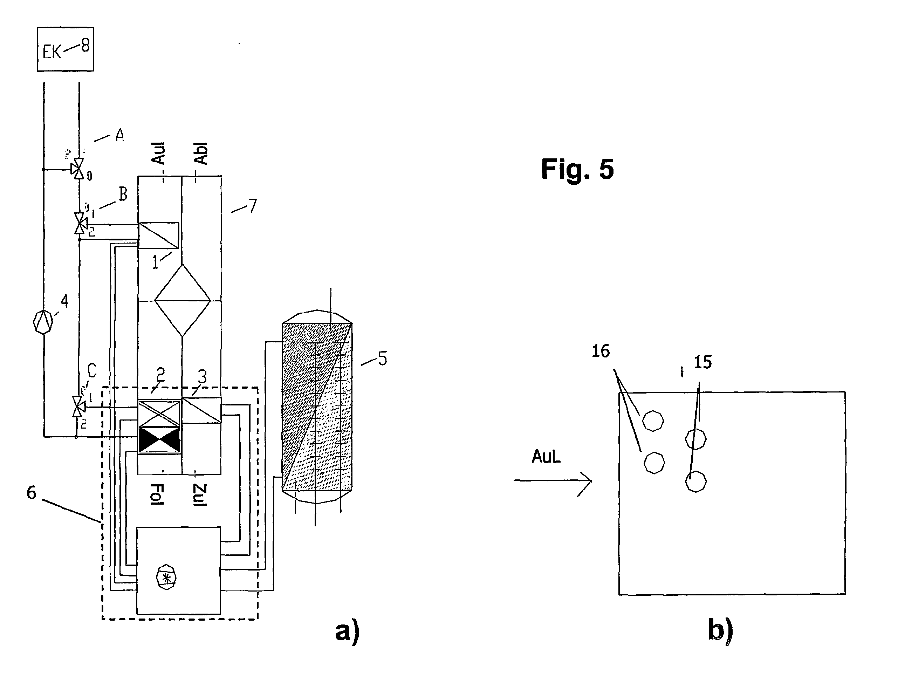

Eine weitere alternative Ausführungsvariante für eine Lüftungsanordnung ist in Figur 5 a dargestellt. Die alternative Weiterbildung betrifft den Kältemittelkreislauf der Wärmepumpe 6.

Normalerweise erfolgt im Kältemittelkreislauf einer Wärmepumpe eine Verdichtung des Kältemittelgases auf eine hohe Temperatur und wird bspw. zum Kondensator für die Brauchwassererwärmung 5 oder/und zum Luftkondensator 3 zur Lufterwärmung gepumpt. Dort kondensiert das Kältemittel und gelangt in den meisten Fällen zu einem internen Wärmetauscher innerhalb der Wärmepumpe 6, dem so genannten Rekuperator, der die so genannte Saugastemperatur und damit den Grad der Überhitzung nach dem Verdampfer erhöht, um zu vermeiden, dass das flüssige Kältemittel nicht in den Verdichter angesaugt wird. Stromab zum Rekuperator sind häufig weitere Komponenten, wie Sammler und Trockner, angeordnet. Das Kältemittel gelangt schließlich zu einer Expansionseinheit, durch die es entspannt wird, wodurch Temperatur und Druck abnehmen. Im Verdampfer nimmt das Kältemittel wieder Wärme von der Wärmequelle auf, und gelangt zum Verdichter.
Der Kreislauf beginnt von neuen.

Es zeigt sich jedoch, dass das Kältemittel vor dem Expansionsventil über eine beträchtliche Wärmeenergie verfügt, die bislang ungenutzt bleibt. In vorteilhafter Weise wird daher vorgeschlagen zwischen dem Rekuperator und der Expansionseinheit einen zusätzlichen Wärmetauscher vorzusehen, durch den dem Kältemittel Wärme entzogen wird. Auf diese Weise lässt sich die Kälteleistung der Wärmepumpe steigern weitgehend ohne den Einsatz zusätzlicher elektrischer Energie. Dieser zusätzliche Wärmetauscher muss natürlich durchströmt werden, um die Wärme abtransportieren zu können.

Diesem Gedanken folgend bietet es sich gemäß dem Ausführungsbeispiel in Figur 5 an den Fluid-Luftwärmeübertrager 1 weiter auszubilden. So kann die Vorwärmung für die Außenluft AuL durch einen handelsüblichen Wärmeübertrager erfolgen, der zwei Kreisläufe 15, 16 vorsieht. Hierzu ist in Fig. 5b ein schematisierter Wärmetauscher 1 dargestellt, der von der Außenluft AuL durchströmt wird und einen von der Sole durchströmten Kreislauf 15 und einem von dem Kältemittel durchströmten Kreislauf 16 aufweist. Der Kreislauf 15 gibt die Wärme oder Kälte an den Außenluftstrom AuL ab. Der Kreislauf 16, der vom Kältemittel durchströmt wird, gibt die Wärme vom Kältemittel an den Außenluftstrom AuL ab und vergrößert dadurch den Grad der Unterkühlung.

Mit der vorstehend beschriebenen erfindungsgemäß ausgebildeten Lüftungsanordnung ist eine Reihe von Vorteilen verbunden, auf die nachstehend reihenhaft verwiesen wird:

Ein Umschalten im Kältemittelkreis der Wärmepumpe zwischen Kühl- und Wärmebetrieb entfällt vollständig, wodurch bisher bekannte Schwachstellen, wie das Vorsehen von Vierwegeventilen oder Magnetventilen wegfällt. Die Umschaltung erfolgt nun im Kreislauf des Wärmespeichers, bspw. des Erdwärmekreislaufes.

Durch den Wegfall der bisher erforderlichen Umschaltung der Wärmepumpe zwischen Kühl- und Wärmebetrieb ist ein stabiler Kältekreislauf gewährleistet und eine deutlich höhere Leistungszahl möglich.

Die in die Wärmepumpe investierte Energie kann effizienter genutzt werden.

Im Kühlbetrieb treten keinerlei Energieverluste auf, zumal in diesem Fall der Brauchwasserspeicher oder ein anderer Speicher erhitzt werden kann. Die Wärme kann aber auch an eine herkömmliche Heizung abgegeben werden.

Es besteht die Möglichkeit der Ausnutzung zweier oder mehr Wärmequellen, so dass eine weitgehend konstante Temperatur im Verdampfer vorherrscht, die letztlich zu einer höheren Leistungszahl der Wärmepumpe führt. Auch ist eine längere Standzeit der Wärmepumpe erzielbar, zumal die Verdichterleistung der Wärmepumpe reduziert werden kann.

Eine einfachere Wärmepumpenkonstruktion wird erreicht durch einfachere Rohrführung und dem Einsatz weniger Kältemittel, zumal weniger Rohre und Ventile nötig sind. Durch gezielte Wärmenutzung der Abluft kann die Energie effizienter umgesetzt werden. Wird der Erdkollektor 8 entsprechend groß ausgelegt, so kann der Fluid-Luft-Kombiverdampfer die Wärme effektiv zur Verdampfung verwenden, wodurch die Vereisungsgefahr nahezu ausgeschlossen werden kann. Der Fluid-Luft-Wärmeübertrager 1 kann gleichzeitig erwärmt werden, wodurch die Vereisungsgefahr auch am LLW vermieden werden kann.

Auch ist eine Einbindung eines zusätzlichen Solarkollektors leicht möglich, zumal die Kollektorströmung wie auch eine Erdkollektorströmung stofflich identisch sind und unter gleichen Druckbedingungen betrieben werden können. Auch im Falle unterschiedlicher Druckniveaus und Fluiden im Solarkollektorkreislauf und Erdkollektorkreislauf können beide Kreisläufe thermisch mittels Plattenwärmetauscher gekoppelt werden.

### Bezugszeichenliste

- 1: Fluid-Luft-Wärmeübertrager
- 2: Fluid-Luft-Kombiverdampfer
- 3: Kondensator
- 4: Pumpe
- 5: Brauchwasserspeicher
- 6: Wärmepumpe
- 7: Lüftungsgerät
- 8: Erdkollektor (Wärmespeicher)
- 9: Lamellen
- 10: Äußere Rohrleitung
- 11: Innere Rohrleitung
- 12: Klappe
- 13: Bypassleitung, Abluftumgehung, Bypasskanal
- 14: Solarkollektor
- 15: Kreislauf
- 16: Kreislauf
- A,B,C: Dreiwegeventile
- Abl: Abluftstrom
- Aul: Außenluftstrom
- Fol: Fortluftstrom
- Zul: Zuluftstrom
- LLW: Luft-Luft-Wärmeübertrager

## Patentansprüche

1. Wärmepumpe mit einem Kältemittelkreislauf in dem ein Kältemittelverdampfer vorgesehen ist,
**dadurch gekennzeichnet, dass** der Kältemittelverdampfer als Fluid-Luft-Kombiverdampfer ausgebildet ist, der wenigstens zwei getrennte Kanalsysteme aufweist, wobei wenigstens eines der beiden Kanalsysteme eine freie Oberfläche aufweist, an der lammellenartige Flächenelemente (9) angebracht sind, die in thermischen Kontakt mit einem gerichteten Luftstrom treten, dass die wenigstens zwei Kanalsysteme zumindest abschnittsweise in thermischem Kontakt miteinander stehen, und
dass durch das eine Kanalsystem ein Kältemittel und durch das andere Kanalsystem ein wärmeabgebendes Fluid geleitet wird, und
dass das Kältemittel in thermischen Kontakt sowohl mit dem wärmeabgebenden Fluid als auch vermittels der, an der freien Oberfläche angebrachten lamellenartigen Flächenelemente mit dem gerichteten Luftstrom tritt.

2. Wärmepumpe nach Anspruch 1,
**dadurch gekennzeichnet, dass** die wenigstens zwei Kanalsysteme in Form einer ersten Rohrleitung (10) mit einem ersten Rohrinnendurchmesser d₁ und einer zweiten Rohrleitung (11) mit einem zweiten Rohrinnendurchmesser d₂ mit d₂ < d₁, die innenliegend in der ersten Rohrleitung verläuft, ausgebildet sind, wobei das erste Kanalsystem durch die zweite Rohrleitung (11) und das zweite Kanalsystem von der ersten und zweiten Rohrleitung begrenzt sind, und die erste Rohrleitung über eine freie Rohraußenseite verfügt.

3. Wärmepumpe nach Anspruch 2,
**dadurch gekennzeichnet, dass** an der Rohraußenseite der ersten Rohrleitung (10) die lammellenartigen Flächenelemente (9) angebracht sind.

4. Wärmepumpe nach Anspruch 1,
**dadurch gekennzeichnet, dass** die wenigstens zwei Kanalsysteme in Form einer gemeinsamen Rohrleitung ausgebildet sind, wobei die Rohrleitung über eine Rohroberfläche verfügt,
und dass die Rohrleitung wenigstens eine innere Trennwand aufweist, die das von der Rohrleitung umschlossene Volumen in mindestens zwei getrennte Rohrleitungslängsteile aufteilt und über die die wenigstens zwei Rohrleitungslängsteile miteinander in thermischem Kontakt miteinander stehen.

5. Wärmepumpe nach Anspruch 4,
**dadurch gekennzeichnet, dass** an der Rohroberfläche die lamellenartig ausgebildeten Flächenelemente (9) angebracht sind und/oder mit dieser in thermischem Kontakt stehen.

6. Wärmepumpe nach einem der Ansprüche 2 bis 5,
**dadurch gekennzeichnet, dass** das wärmeabgebende Fluid durch das erste Kanalsystem und das Kältemittel durch das zweite Kanalsystem geleitet wird.

7. Lüftungsanordnung für ein Gebäude mit Wärmeentzug aus einem aus dem Gebäude gerichteten Abluftstrom (Abl), der über einen Luft-Luft-Wärmeübertrager (LLW) in thermischen Kontakt mit einem Außenluftstrom (Aul) tritt und in thermischen Kontakt mit einem Kältemittelverdampfer einer Wärmepumpe nach einem der Ansprüche 1 bis 6 steht, wobei die freie Oberfläche wenigstens eines der beiden Kanalsysteme in thermischen Kontakt mit dem gerichteten Abluftstrom (Abl) tritt, und dass das wärmeabgebende Fluid im Kreislauf eines Wärmespeichersystems (8) zirkuliert.

8. Lüftungsanordnung nach Anspruch 7,
**dadurch gekennzeichnet, dass** die Wärmepumpe (6) einen Kondensator (3) aufweist, der im erwärmten Außenluftstrom (Aul) in Strömungsrichtung dem Luft-Luft-Wärmetauscher (LLW) nachgeschaltet ist, und
dass in Strömungsrichtung dem Kondensator (3) nachgeordnet ein Zuluftstrom (Zul) entsteht, der in das Gebäude gerichtet ist.

9. Lüftungsanordnung nach Anspruch 7 oder 8,
**dadurch gekennzeichnet, dass** im Kreislauf des Wärmespeichersystems (8) eine erste Ventileinheit (A) vorgesehen ist, durch die die Zirkulation des Fluids durch das Wärmespeichersystem (8) regelbar ist.

10. Lüftungsanordnung nach einem der Ansprüche 7 bis 9,
**dadurch gekennzeichnet, dass** im Außenluftstrom (Aul) in Strömungsrichtung vor dem Luft-Luft-Wärmetauscher (LLW) ein Fluid-Luftwärmetauscher (1) vorgesehen ist, der von dem im Kreislauf des Wärmespeichersystems (8) zirkulierenden Fluid durchsetzbar ist.

11. Lüftungsanordnung nach Anspruch 10,
**dadurch gekennzeichnet, dass** im Kreislauf des Wärmespeichersystems (8) eine zweite Ventileinheit (B) vorgesehen ist, durch die der Zufluss des Fluids zum Fluid-Luftwärmetauscher (1) regelbar ist.

12. Lüftungsanordnung nach einem der Ansprüche 8 bis 11,
**dadurch gekennzeichnet, dass** parallel oder in Serie zum Kondensator (3) ein Brauchwasserspeicher (5) vorgesehen ist, der thermisch an die Wärmepumpe (6) gekoppelt ist.

13. Lüftungsanordnung nach einem der Ansprüche 7 bis 9,
**dadurch gekennzeichnet, dass** das Wärmespeichersystem (8) einen Erdwärmekollektor, Luftwärmekollektor und/oder einen Wasserwärmekollektor aufweist.

14. Lüftungsanordnung nach einem der Ansprüche 7 bis 13,
**dadurch gekennzeichnet, dass** ein Solarkollektor (14) vorgesehen ist, der von einer Kollektorströmung durchsetzt wird, die alternativ oder in Kombination mit dem im Kreislauf des Wärmespeichersystems (8) zirkulierenden Fluid dem Fluid - Luftwärmetauscher (1) und/oder dem Fluid -Luft-Kombiverdampfer (2) zuschaltbar ist.

15. Lüftungsanordnung nach einem der Ansprüche 7 bis 14,
**dadurch gekennzeichnet, dass** im Kreislauf des Wärmespeichersystems (8) eine dritte Ventileinheit (C) vorgesehen ist, durch die der Zufluss des Fluid-Luft-Kombiverdampfers (2) regelbar ist.

16. Lüftungsanordnung nach einem der Ansprüche 9, 11 oder 15,
**dadurch gekennzeichnet, dass** die Ventileinheit ein Dreiwege-Ventil ist.

17. Lüftungsanordnung nach einem der Ansprüche 7 bis 16,
**dadurch gekennzeichnet, dass** in Strömungsrichtung dem Fluid -Luft-Kombiverdampfer (2) vorgeschaltet eine Strömungsumlenkeinheit (12) vorgesehen ist, die in wenigstens zwei Stellungen überführbar ist, eine erste Stellung, in der der gesamte Abluftstrom (Abl) den Fluid -Luft-Kombiverdampfer (2) durchsetzt, und eine zweite Stellung in der der gesamte Abluftstrom (Abl) als Fortluftstrom (Fol) durch einen Bypasskanal am Fluid -Luft-Kombiverdampfer (2) vorbeigeleitet wird.

18. Lüftungsanordnung nach einem der Ansprüche 7 bis 16,
**dadurch gekennzeichnet, dass** in Strömungsrichtung dem Fluid -Luft-Kombiverdampfer (2) vorgeschaltet eine Strömungsumlenkeinheit (12) vorgesehen ist, die den Abluftstrom in einem variabel einstellbaren oder einem fest vorgebaren Mengenverhältnis durch den Fluid-Luft-Kombiverdampfer (2) hindurchgeleitet und/oder durch einen Bypasskanal am Fluid -Luft-Kombiverdampfer (2) vorbeigeleitet wird.

19. Lüftungsanordnung nach Anspruch 17 oder 18,
**dadurch gekennzeichnet, dass** die Strömungsumlenkeinheit (12) als Strömungsklappe ausgebildet ist

20. Lüftungsanordnung nach Anspruch 17 oder 18,
**dadurch gekennzeichnet, dass** die Strömungsumlenkeinheit (12) als Ventil ausgebildet ist.

21. Lüftungsanordnung nach einem der Ansprüche 7 bis 20,
**dadurch gekennzeichnet, dass** die Wärmepumpe (6) einen erweiterten Kältemittelkreislauf (15) vorsieht, der thermisch mit dem Fluid-Luft-Wärmetauscher (1) gekoppelt ist.

## Claims

1. A heat pump having a refrigerant loop in which a refrigerant evaporator is provided,
**characterized in that** the refrigerant evaporator is implemented as a combined fluid-air evaporator, which has at least two separate duct systems, at least one of the two duct systems having a free surface to which lamellar plane elements (9) are attached, which come into thermal contact with a directed air flow, the at least two duct systems are at least partially in thermal contact with one another, and
a refrigerant is conducted through one duct system and an exothermic fluid is conducted through the other duct system, and
the refrigerant comes into thermal contact both with the exothermic fluid and also, using the lamellar plane elements attached to the free surface, with the directed air flow.

2. The heat pump according to claim 1,
**characterized in that** the at least two duct systems are implemented in the form of a first pipeline (10) having a first pipe internal diameter d₁ and a second pipeline (11), having a second pipe internal diameter d₂, with d₂ < d₁, which runs internally in the first pipeline, the first duct system being delimited by the second pipeline (11) and the second duct system being delimited by the first and second pipeline, and the first pipeline having a free pipe outside.

3. The heat pump according to claim 2,
**characterized in that** the lamellar plane elements (9) are attached to the pipe outside of the first pipeline (10).

4. The heat pump according to claim 1,
**characterized in that** the at least two duct systems are implemented in the form of a shared pipeline, the pipeline having a pipe surface,
and the pipeline has at least one internal partition wall, which divides the volume enclosed by the pipeline into at least two separate pipeline longitudinal parts and via which the at least two pipeline longitudinal parts are in thermal contact with one another.

5. The heat pump according to claim 4,
**characterized in that** the lamellar plane elements (9) are attached to the pipe surface and/or are in thermal contact therewith.

6. The heat pump according to one of claims 2 through 5,
**characterized in that** the exothermic fluid is conducted through the first duct system and the refrigerant is conducted through the second duct system.

7. A ventilation arrangement for a building having heat absorption from a used air flow (Abl) directed out of the building, which comes into thermal contact with an outside air flow (Aul) via an air-air heat exchanger (LLW) and is in thermal contact with a refrigerant evaporator of a heat pump according to one of claims 1 through 6, the free surface of at least one of the two duct systems coming into thermal contact with the directed air flow (Abl) and the exothermic fluid circulating in the loop of a heat accumulator system (8).

8. The ventilation arrangement according to claim 7,
**characterized in hat** the heat pump (6) has a condenser (3), which is connected downstream from the air-air heat exchanger (LLW) in the flow direction in the heated outside air flow (Aul), and
an intake air flow (Zul), which is directed into the building, arises downstream in the flow direction from the condenser (3).

9. The ventilation arrangement according to claim 7 or 8,
**characterized in that** a first valve unit (A), through which the circulation of the fluid through the heat accumulator system (8) may be regulated, is provided in the loop of the heat accumulator system (8).

10. The ventilation arrangement according to one of claims 7 through 9,
**characterized in that** a fluid-air heat exchanger (1), which may be permeated by the fluid circulating in the loop of the heat accumulator system (8), is provided in the outside air flow (Aul) in the flow direction before the air-air heat exchanger (LLW).

11. The ventilation arrangement according to claim 10,
**characterized in that** a second valve unit (B), through which the inflow of the fluid to the fluid-air heat exchanger (1) may be regulated, is provided in the loop of the heat accumulator system (8).

12. The ventilation arrangement according to one of claims 8 through 11,
**characterized in that** an industrial water accumulator (5), which is thermally coupled to the heat pump (6), is provided in parallel or in series to the condenser (3).

13. The ventilation arrangement according to one of claims 7 through 9,
**characterized in that** the heat accumulator system (8) has a geothermal collector, aerothermal collector, and/or a hydrothermal collector.

14. The ventilation arrangement according to one of claims 7 through 13,
**characterized in that** a solar collector (14) is provided, which is permeated by a collector flow that may be connected to the fluid-air heat exchanger (1) and/or the combined fluid-air evaporator (2) alternatively or in combination with the fluid circulating in the loop of the heat accumulator system (8).

15. The ventilation arrangement according to one of claims 7 through 14,
**characterized in that** a third valve unit (C), through which the inflow of the combined fluid-air evaporator (2) may be regulated, is provided in the loop of the heat accumulator system (8).

16. The ventilation arrangement according to one of claims 9, 11, or 15,
**characterized in that** the valve unit is a three-way valve.

17. The ventilation arrangement according to one of claims 7 through 16,
**characterized in that** a flow deflection unit (12) is provided in the flow direction of the combined fluid-air evaporator (2), which may be switched into at least two positions, a first position in which the entire used air flow (Abl) permeates the combined fluid-air evaporator (2), and a second position, in which the entire used air flow (Abl) is conducted past the combined fluid-air evaporator (2) through a bypass channel as an exhaust air flow (Fol).

18. The ventilation arrangement according to one of claims 7 through 16,
**characterized in that** a flow deflection unit (12) is provided connected upstream in the flow direction from the combined fluid-air evaporator (2), which conducts the used air flow in a variably adjustable or a fixed predefined quantity ratio through the combined fluid-air evaporator (2) and/or through a bypass channel past the combined fluid-air evaporator (2).

19. The ventilation arrangement according to claim 17 or 18,
**characterized in that** the flow deflection unit (12) is implemented as a flow flap.

20. The ventilation arrangement according to claim 17 or 18,
**characterized in that** the flow deflection unit (12) is implemented as a valve.

21. The ventilation arrangement according to one of claims 7 through 20,
**characterized in that** the heat pump (6) provides an expanded refrigerant loop (15), which is thermally coupled to the fluid-air heat exchanger (1).

## Revendications

1. Pompe à chaleur avec un circuit de fluide frigorigène dans lequel est prévu un évaporateur de fluide frigorigène,
**caractérisée en ce que** l'évaporateur de fluide frigorigène est réalisé en tant qu'évaporateur mixte air/fluide, qui comporte au moins deux systèmes de canaux séparés, au moins l'un des deux systèmes de canaux présentant une surface libre, sur laquelle sont montés des éléments superficiels (9) du type de lamelles, qui entrent en contact thermique avec un flux d'air orienté, **en ce que** les au moins deux systèmes de canaux sont au moins par sections en contact thermique l'un avec l'autre,
**en ce qu'**à travers un système de canaux, il est conduit un fluide frigorigène et à travers l'autre système de canaux, il est dirigé un fluide restituant de la chaleur, et
**en ce que** le fluide frigorigène entre en contact thermique avec le fluide restituant de la chaleur, ainsi que par l'intermédiaire des éléments superficiels du type de lamelles montés sur la surface libre, avec le flux d'air orienté.

2. Pompe à chaleur selon la revendication 1,
**caractérisée en ce que** les au moins deux systèmes de canaux sont réalisés sous la forme d'une première tuyauterie (10) avec un premier diamètre intérieur de tuyau d₁, et d'une deuxième tuyauterie (11) avec un deuxième diamètre intérieur de tuyau d₂, avec d₂ < d₁, qui s'étend à l'intérieur dans la première tuyauterie, le premier système de canaux étant délimité par la deuxième tuyauterie (11) et le deuxième système de canaux étant délimité par la première et la deuxième tuyauterie, et la première tuyauterie disposant d'une face extérieure de tuyau libre.

3. Pompe à chaleur selon la revendication 2,
**caractérisée en ce que** les éléments superficiels (9) du type de lamelles sont montés sur la face extérieure de tuyau de la première tuyauterie (10).

4. Pompe à chaleur selon la revendication 1,
**caractérisée en ce que** les au moins deux systèmes de canaux sont réalisés sous la forme d'une tuyauterie commune, le tuyauterie disposant d'une surface de tuyau,
et **en ce que** la tuyauterie comporte au moins une paroi de séparation intérieure, qui divise le volume entouré par la tuyauterie en au moins deux parties longitudinales séparées de la tuyauterie et par l'intermédiaire de laquelle les aux moins deux parties longitudinales de la tuyauterie sont en contact thermique l'une avec l'autre.

5. Pompe à chaleur selon la revendication 4,
**caractérisée en ce que**, les éléments superficiels (9) réalisés sous la forme de lamelles sont montés sur la surface de tuyau et/ou sont en contact thermique avec cette dernière.

6. Pompe à chaleur selon l'une quelconque des revendications 2 à 5,
**caractérisée en ce que** le fluide restituant de la chaleur est conduit à travers le premier système de canaux et le fluide frigorigène est conduit à travers le deuxième système de canaux.

7. Dispositif de ventilation pour un bâtiment avec évacuation de la chaleur d'un flux d'air évacué (Abl) orienté hors du bâtiment, qui par l'intermédiaire d'un échangeur thermique air/air (LLW) entre en contact thermique avec un flux d'air extérieur (Aul) et qui est en contact thermique avec un évaporateur de fluide frigorigène d'une pompe à chaleur selon l'une quelconque des revendications 1 à 6, la surface libre d'au moins l'une des deux systèmes de canaux entrant en contact thermique avec le flux d'air évacué orienté (Abl) et en ce que le fluide restituant de la chaleur circule dans le circuit d'un système d'accumulateur de chaleur (8).

8. Dispositif de ventilation selon la revendication 7,
**caractérisé en ce que** la pompe à chaleur (6) comporte un condensateur (3) qui est monté en aval dans le flux d'air extérieur chauffé (Aul) dans le sens de circulation de l'échangeur thermique air/air (LLW), et
**en ce qu'**il naît dans le sens de circulation, en aval du condensateur (3) un flux d'air frais (Zul) qui est dirigé vers l'intérieur du bâtiment.

9. Dispositif de ventilation selon la revendication 7 ou 8,
**caractérisé en ce que** dans le circuit du système d'accumulateur de chaleur (8), il est prévu une première unité de soupapes (A) par l'intermédiaire de laquelle la circulation du fluide à travers le système d'accumulateur de chaleur (8) est réglable.

10. Dispositif de ventilation selon l'une quelconque des revendications 7 à 9,
**caractérisé en ce que,** dans le flux d'air extérieur (Aul), en amont de l'échangeur thermique air/air (LLW) dans le sens de circulation, il est prévu un échangeur thermique fluide/air (1) qui est susceptible d'être traversé par le fluide circulant dans le circuit du système d'accumulateur de chaleur (8).

11. Dispositif de ventilation selon la revendication 10,
**caractérisé en ce que** dans le circuit du système d'accumulateur de chaleur (8), il est prévu une deuxième unité de soupapes (B) par l'intermédiaire de laquelle le débit du fluide à travers l'échangeur thermique fluide/air (1) est réglable.

12. Dispositif de ventilation selon l'une quelconque des revendications 8 à 11,
**caractérisé en ce qu'**à la parallèle ou en série par rapport au condensateur (3), il est prévu un accumulateur d'eau sanitaire (5) qui est thermiquement couplé avec la pompe à chaleur (6).

13. Dispositif de ventilation selon l'une quelconque des revendications 7 à 9,
**caractérisé en ce que** le système d'accumulateur de chaleur (8) comporte un collecteur d'énergie géothermique, un collecteur d'énergie aérothermique et/ou un collecteur d'énergie aquathermique.

14. Dispositif de ventilation selon l'une quelconque des revendications 7 à 13,
**caractérisé en ce qu'**il est prévu un collecteur solaire (14) qui est traversé par un écoulement collecteur, qui en variante ou en association avec le fluide circulant dans le circuit du système d'accumulateur de chaleur (8) est susceptible d'être mis en circuit avec l'échangeur thermique à fluide (1) et ou avec l'échangeur thermique mixte air/fluide (2).

15. Dispositif de ventilation selon l'une quelconque des revendications 7 à 14,
**caractérisé en ce que** dans le circuit du système d'accumulateur de chaleur (8), il est prévu une troisième unité de soupapes (C) par l'intermédiaire de laquelle le débit du fluide à travers l'échangeur thermique fluide/air (2) est réglable.

16. Dispositif de ventilation selon l'une quelconque des revendications 9, 11 ou 15, **caractérisé en ce que** l'unité ed soupapes est une soupape à trois voies.

17. Dispositif de ventilation selon l'une quelconque des revendications 7 à 16,
**caractérisé en ce que** dans le sens de circulation, il est prévu en amont de l'échangeur thermique mixte air/fluide (2) une unité de renvoi de l'écoulement 12 qui est susceptible d'être passée dans au moins deux positions, une première position dans laquelle l'ensemble du flux d'air évacué (Abl) traverse l'échangeur thermique mixte air/fluide (2), et une deuxième position dans laquelle l'ensemble du flux d'air évacué (Abl) est dirigé pour passer à travers un canal de dérivation, sous la forme d'un flux d'air rejeté (Fol) devant l'échangeur thermique mixte air/fluide (2).

18. Dispositif de ventilation selon l'une quelconque des revendications 7 à 16,
**caractérisé en ce que** dans le sens de circulation, il est prévu en amont de l'échangeur thermique mixte air/fluide (2) une unité de renvoi de l'écoulement (12) qui dirige le flux d'air évacué dans un rapport de quantité variable ou fixe définissable à travers l'échangeur thermique mixte air/fluide (2) et/ou à travers un canal de dérivation, sous la forme d'un flux d'air rejeté (Fol) devant l'échangeur thermique mixte air/fluide (2).

19. Dispositif de ventilation selon la revendication 17 ou 18,
**caractérisé en ce que** l'unité de renvoi d'écoulement (12) est réalisée sous la forme d'un volet d'écoulement.

20. Dispositif de ventilation selon la revendication 17 ou 18,
**caractérisé en ce que** l'unité de renvoi d'écoulement (12) est réalisée sous la forme d'une soupape.

21. Dispositif de ventilation selon l'une quelconque des revendications 7 à 20,
**caractérisé en ce que** la pompe à chaleur (6) prévoit un circuit supplémentaire de fluide frigorigène (15) qui est thermiquement couplé à l'échangeur thermique à fluide (1).
